# EUROPÄISCHE PATENTANMELDUNG

(11) **EP 3 185 441 A1**
(43) Veröffentlichungstag der Anmeldung: **28.06.2017**
(21) Anmeldenummer: 15202239.8
(22) Anmeldetag: 22.12.2015
(51) Int. Cl.: H04B 10/032, H04J 14/02, H04Q 11/00

(54) **VERBESSERUNG DER MULTI LAYER RESILIENZ IN KOMMUNIKATIONSNETZEN**

(71) Anmelder: Deutsche Telekom AG, 53113 Bonn (DE)
(72) Erfinder: WISSEL, Felix, 64372 Ober-Ramstadt (DE)
(74) Vertreter: Brandt & Nern Patentanwälte

(57) **Zusammenfassung**

Zur Verbesserung der Multi Layer Resilienz in einem Kommunikationsnetz, in welchem Datenquellen und Datensenken (3₁ - 3ₙ) mehrerer Netzwerkstandorte an ein Backbone-Netz aus Netzknoten (1₁ - 1ₙ; 8₁ - 8ₙ) und Datentransportverbindungen (Kanten 2₁ - 2n; 9₁ - 9ₙ) angekoppelt sind, wird vorgeschlagen, das Backbone-Netz in mindestens zwei Netzwerkebenen (A, B) mit zueinander disjunkten Transportinfrastrukturen auszubilden. Innerhalb einer ersten Netzwerkebene (A) wird ein Datenpfad als Arbeitspfad zur Datenübertragung über eine Ende-zu-Ende-Verbindung bereitgestellt. Gleichzeitig wird innerhalb der Transportinfrastruktur einer der anderen Netzwerkebenen (B, ...Z) ein Datenpfad als Ersatzpfad für dieselbe Ende-zu-Ende-Verbindung bereitgestellt. Alle von einer Datenquelle gesendeten Daten werden sowohl in den Arbeitspfad als auch in den Ersatzpfad eingekoppelt, wobei aber am Netzwerkstandort der Datensenke ein durchgängiger Datenübertragungsweg nur über den Arbeitspfad hergestellt wird. Im Falle einer Störung im Arbeitspfad der ersten Netzwerkebene (A) wird der Datenübertragungsweg bei der Datensenke vom Arbeitspfad auf den Ersatzpfad der Netzwerkebene (B, ...Z) verlagert, in der Netzwerkebene (A) ein neuer Arbeitspfad aufgesetzt und danach der Datenübertragungsweg wieder in die Netzwerkebene (A) zurück verlagert.

## Beschreibung

Die Erfindung betrifft eine Lösung zur Verbesserung der Robustheit der Datenübertragung bei der Übertragung von Nutzdaten in Kommunikationsnetzen im Hinblick auf in solchen Netzen auftretende Störungen oder Teilausfälle. Im Rahmen der vorgestellten Lösung geht es dabei nicht darum, die Sicherheit der Datenübertragung durch hardwaretechnische Maßnahmen zu erhöhen, welche die Ausfallwahrscheinlichkeit einzelner Netzkomponenten verringern. Gegenstand der Erfindung ist auch nicht der Schutz der Daten gegen Manipulation oder unberechtigte Zugriffe auf die durch die Daten transportierten Inhalte. Die Erfindung bezieht sich vielmehr darauf, den eigentlichen Vorgang der Datenübertragung dadurch robuster zu machen, dass ein zwischen einer Datenquelle und einer Datensenke erfolgender Datenaustausch auch im Falle eines Teilausfalls des Netzes, aufgrund eines Ausfalls einzelner Netzwerkkomponenten oder durch eine Unterbrechung von Verbindungen zwischen Netzwerkkomponenten, weitgehend unbeeinträchtigt fortgesetzt werden kann. Im Hinblick darauf, dass dies aber, wie betont, nicht durch eine hardwaretechnische Verringerung der Ausfallhäufigkeit einzelner Netzkomponenten erreicht werden soll, setzt die vorgeschlagene Lösung, wie noch zu zeigen sein wird, eine gewisse Redundanz in der Infrastruktur des erfindungsgemäßen Kommunikationsnetzes voraus.

Gegenstände der Erfindung sind ein entsprechendes Verfahren und ein zur Durchführung des Verfahrens geeignetes optisches Kommunikationsnetz. In diesem Zusammenhang sei darauf hingewiesen, dass sich zwar der Sachanspruch hinsichtlich des verwendeten Übertragungsmediums auf eine bestimmte Art von Kommunikationsnetzen, nämlich auf ein optisches Kommunikationsnetz bezieht, dass jedoch der grundsächliche verfahrenstechnische Ansatz der erfindungsgemäßen Lösung nicht auf optische Kommunikationsnetze beschränkt ist. Vielmehr umfasst die Erfindung in Bezug auf das Verfahren Kommunikationsnetze im Grunde beliebiger Art, so insbesondere auch elektrische beziehungsweise elektronische Kommunikationsnetze.

Zum Zweck der Modulierung von Kommunikationsnetzen ist es gebräuchlich, diese auf das OSI-Modell abzubilden, in welchem die Netze in Bezug auf die verwendeten physischen Komponenten, die Interaktion dieser physischen Komponenten untereinander und die zur Datenübertragung sowie zur Steuerung dieser Übertragung verwendeten Protokolle in verschiedene Schichten, sogenannte Layer, unterteilt werden. Im Layer 1 findet die physische Übertragung der die Daten und ihre Nutzinhalte transportierenden Signale statt, weshalb dieser Layer auch als Physical Layer beziehungsweise physische Schicht bezeichnet wird. Im Layer 2, dem sogenannten Data Link Layer beziehungsweise der Sicherungsschicht, sind Sicherungsmechanismen, wie Prüfsummenbildung und Ähnliches, für Ende-zu-Ende-Verbindungen, das heißt für Verbindungen zwischen einer Datenquelle und einer Datensenke, implementiert. Der Layer 3, der sogenannte Network Layer beziehungsweise die Vermittlungsschicht, umfasst Adressschemata und Routingprotokolle zur Wegesuche durch das Netz. In dem Layer 4, dem Transport Layer beziehungsweise der Transportschicht, werden das Senden und Empfangen der Daten auf Paketebene kontrolliert und erforderlichenfalls das wiederholte Senden einzelner Datenpakete veranlasst.

In allen der vorgenannten Layer beziehungsweise Netzschichten werden Schutzmechanismen zur Sicherstellung einer ungehinderten Datenübertragung verwendet. Im Hinblick darauf und auf die Tatsache, dass Maßnahmen zur Erhöhung beziehungsweise Verbesserung der Robustheit der Datenübertragung, so auch die nachfolgend beschriebene Lösung, sich in der Regel in mehreren der zuvor beschriebenen Schichten auswirken, wird in diesem Zusammenhang auch von der sogenannten Multi Layer Resilienz beziehungsweise der Multi Layer Resilience gesprochen. Der Begriff der Resilienz bezieht sich hierbei auf die Robustheit der Datenübertragung in einem Kommunikationsnetz beziehungsweise auf die Widerstandsfähigkeit des Kommunikationsnetzes, die Datenübertragung auch im Falle auftretender Teilausfälle sicherzustellen.

Zur Sicherstellung einer weitgehend unbeeinträchtigten Datenübertragung haben sich insbesondere zwei Mechanismen etabliert. Bei diesen beiden Möglichkeiten handelt es sich einerseits um das Konzept der sogenannten Restoration und andererseits um das Konzept der Protection. Bei der Restoration werden im Fehlerfall benötigte Kapazitäten durch andere Netzwerkressourcen wiederhergestellt, wobei dies gegebenenfalls zuungunsten anderer Bedarfsträger erfolgt. Bei der Protection hingegen werden Ersatzressourcen schon vor dem eigentlichen Fehlerfall bereitgestellt. Die Protection ermöglicht demnach gewissermaßen einer Wiederherstellung des Betriebs "on the fly". In optischen Kommunikationsnetzen wird in diesem Zusammenhang von "Optical Restoration" und "Optical Protection" gesprochen.

Im Falle der Optical Protection wird das optische Signal am Sender durch einen Splitter oder sogenannte Y-Kabel (beziehungsweise Verteilerkabel) auf zwei oder mehr Glasfasern verteilt. Die hierbei entstehenden Lichtpfade werden als aktiver Wirkpfad oder Arbeitspfad und Ersatzpfad beziehungsweise Ersatzpfade bezeichnet. Beim Empfänger wird mittels schneller optischer Schalter entschieden, welches der ankommenden Signale, also das Signal welchen Pfades (Arbeitspfad oder Ersatzpfad) ausgewählt und an den Router weitergegeben wird. Im Falle eines Faserbruchs im Arbeitspfad erfolgt eine Umschaltung auf einen Ersatzpfad. Arbeits- und Ersatzpfad beziehungsweise Ersatzpfade sollten hierbei vorzugsweise zumindest in Bezug auf wesentliche physische Parameter (zum Beispiel Dämpfung, Weglänge und dergleichen) äquivalent ausgelegt werden.

Bei der Optical Restoration wird zunächst nur der Arbeitspfad beziehungsweise Wirkpfad aufgesetzt. Erst im Fall eines Faserbruchs wird dynamisch ein neuer Lichtpfad für die Datenübertragung gesucht. Dieser neue Lichtpfad beziehungsweise Ersatzpfad wird demnach erst im Falle einer Störung im Arbeitspfad komplett neu eingerichtet, und zwar selbst dann erst neu eingerichtet, wenn er möglicherweise schon vorgeplant ist. Solange der neue Lichtpfad beziehungsweise der Ersatzpfad aber noch nicht eingerichtet ist, muss Verkehr, das heißt müssen einzelne Datenpakete, verworfen oder anderweitig geschützt werden. Die der Optical Restoration zugrunde liegende Optik wird mittels sogenannter ROADMs (Reconfigurable Optical Add Drop Multiplexer) aufgebaut. Es handelt sich hierbei um optische Netzelemente, welche man sich als Sammlung von Prismen und kleiner Spiegel vorstellen kann und mittels welcher aus einer Glasfaser wellenselektiv einzelne Kanäle ausgewählt und in bestimmten Richtungen weitergeleitet werden.

Aufgabe der Erfindung ist es, gegebenenfalls auch unter Nutzung bereits bekannter Mechanismen die Multi Layer Resilienz in Kommunikationsnetzen im Hinblick auf die in diesen Kommunikationsnetzen erfolgende Datenübertragung noch weiter zu verbessern. Hierzu sind ein entsprechendes Verfahren anzugeben und ein zur Durchführung des Verfahrens geeignetes optisches Kommunikationsnetz bereitzustellen.

Die Aufgabe wird durch ein Verfahren mit den Merkmalen des Patentanspruchs 1 gelöst. Ein die Aufgabe lösendes optisches Kommunikationsnetz wird durch den ersten Sachanspruch charakterisiert. Vorteilhafte Aus- beziehungsweise Weiterbildungen der Erfindung sind durch die jeweiligen Unteransprüche gegeben.

Das zur Lösung der Aufgabe vorgeschlagene Verfahren zur Verbesserung der Multi Layer Resilienz bezieht sich auf ein Kommunikationsnetz, in welchem an mehreren Netzwerkstandorten ("Core Pop Standorte", mit PoP = Point of Presence) Datenquellen und Datensenken an ein Backbone-Netz aus Netzknoten und aus die Netzknoten miteinander verbindenden Datentransportverbindungen (insbesondere optische oder elektrische Kabel) angekoppelt sind. Alle Netzknoten eines solchen Backbone-Netzes sind durch die vorgenannten Datentransportverbindungen untereinander verbunden, ohne dass hierbei jeder Netzknoten direkt mit allen anderen Netzknoten des Backbone-Netzes verbunden wäre. Vielmehr ist üblicherweise in der Praxis keiner der Netzwerkknoten des Backbone-Netzes unmittelbar mit allen anderen Netzknoten verbunden. Im Hinblick darauf, dass sich ein solches Backbone-Netz in einem Graphen aus Knoten und Kanten abbilden lässt, wobei die Kanten die Datentransportverbindungen des Netzes darstellen, soll im Weiteren eine Datentransportverbindung synonym und sprachlich vereinfachend auch als Kante bezeichnet werden.

Zur Verbesserung der Multi Layer Resilienz in einem Kommunikationsnetz der zuvor beschriebenen Art wird erfindungsgemäß vorgeschlagen, das Backbone-Netz in mindestens zwei Netzwerkebenen auszubilden. Jede dieser Netzwerkebenen stellt dabei eine alle Netzwerkstandorte des Backbone-Netzes für die Übertragung von Nutzdaten miteinander verbindende Transportinfrastruktur aus Netzknoten und Kanten dar. Die Transportinfrastrukturen der verschiedenen Netzwerkebenen werden erfindungsgemäß zueinander disjunkt, also getrennt beziehungsweise elementfremd (Elemente/Einrichtungen einer Netzwerkebene gehören nicht gleichzeitig zu einer anderen) ausgebildet. Zudem werden die Datenquellen und Datensenken an jedem Netzwerkstandort jeweils an einen Netzwerkknoten jeder der Netzwerkebenen des Backbone-Netzes angekoppelt. Die zueinander disjunkte Ausbildung der Netzwerkebenen bezieht sich hierbei auf die eigentliche, der Übertragung der Nutzdaten dienende Netzstruktur beziehungsweise Transportinfrastruktur, bezüglich welcher die Netzwerkebenen zueinander physisch vollständig disjunkt ausgebildet sind. Zur Frage der Disjunktheit der unterschiedlichen Netzwerkebenen sollen genauere Ausführungen im Zusammenhang mit der Erläuterung eines Ausführungsbeispiels erfolgen.

Weiterhin besteht die erfindungsgemäße Vorgehensweise in der Bereitstellung und Nutzung eines Datenpfades innerhalb der Transportinfrastruktur einer ersten Netzwerkebene als Arbeitspfad zur Datenübertragung über eine zwischen einer Datenquelle eines Netzwerkstandortes und einer Datensenke eines anderen Netzwerkstandortes aufgebaute Ende-zu-Ende-Verbindung. Gleichzeitig wird aber außerdem innerhalb der Transportinfrastruktur einer der anderen Netzwerkebenen ein Datenpfad als Ersatzpfad zur Datenübertragung zwischen derselben Datenquelle und derselben Datensenke der zuvor genannten Ende-zu-Ende-Verbindung als Backup bereitgestellt.

Sofern nun innerhalb der ersten Netzwerkebene bei der Datenübertragung über den Arbeitspfad eine Störung auftritt, wird der Datenübertragungsweg von dem Arbeitspfad der ersten Netzwerkebene auf den in der anderen Netzwerkebene bereitgestellten Ersatzpfad verlagert. Die Art und Weise, in der diese Verlagerung des Datenübertragungsweges in eine andere Netzwerkebene erfolgt, ist dabei abhängig von der Art des Kommunikationsnetzes, genauer gesagt von dem im Backbone-Netz verwendeten Übertragungsmedium. Ausführungen dazu, wie dies in einem optischen Kommunikationsnetz geschieht, auf welches sich das Verfahren vorzugsweise, aber nicht zwingend bezieht, sollen später, insbesondere auch im Zusammenhang mit der Darstellung eines entsprechenden erfindungsgemäßen Kommunikationsnetzes erfolgen, welches in jedem Falle als optisches Netz ausgebildet ist.

Nach erfolgter Verlagerung des Datenübertragungsweges und damit Übernahme der Datenübertragung durch den Ersatzpfad erfolgt eine Restoration des Datenpfades in der ersten Netzwerkebene durch Aufsetzen eines neuen Arbeitspfades zur Datenübertragung über die immer noch selbe Ende-zu-Ende-Verbindung. Entweder nachdem der Arbeitspfad in der ersten Netzwerkebene neu aufgesetzt worden ist oder, wenn bei bereits neu aufgesetztem Arbeitspfad eine Störung der Datenübertragung innerhalb der Netzwerkebene des Ersatzpfades auftritt, wird der Datenübertragungsweg auf die erste Netzwerkebene zurückverlagert, wobei die Frage wie dies geschieht, wiederum abhängig von der Art des Kommunikationsnetzes, respektive des in seinem Backbone-Netz verwendeten Übertragungsmediums ist. Vorzugsweise wird dabei der ersten der beiden vorgenannten Alternativen, nämlich einer Rückverlagerung des Datenübertragungsweges in die erste Netzwerkebene beziehungsweise in die Netzwerkebene des ursprünglichen Arbeitspfades nach erfolgreicher Restoration des Datenpfades in der betreffenden (ersten) Netzwerkebene, der Vorrang gegeben.

Das erfindungsgemäße Verfahren kombiniert folglich die Mechanismen der Protection und der Restoration, wobei die Protection über eine von der Transportinfrastruktur des ursprünglichen Arbeitspfades vollständig unabhängigen Netzwerkebene, das heißt durch eine physisch unabhängige Transportinfrastruktur gewährleistet wird. Durch die Kombination beider Schutzmechanismen wird eine wesentliche Verbesserung der Resilienz erzielt, da im Fehlerfall mittels Protection unmittelbaren auf einen auftretenden Fehler reagiert und gleich danach durch Restoration die Redundanz wiederhergestellt wird.

Die erste der beiden Alternativen zur Rückverlagerung des Datenübertragungsweges ist dabei nicht so zu verstehen, dass diese Rückverlagerung in die erste Netzwerkebene, also die Netzwerkebene des ursprünglichen Arbeitspfades, zwingend zeitlich unmittelbar, nachdem einer neuer Datenpfad beziehungsweise Arbeitspfad in der ersten Netzwerkebene aufgesetzt wurde, erfolgt. Jedoch erfolgt das Zurückverlagern des Datenübertragungsweges auf die erste Netzwerkebene gemäß dieser ersten Alternative unabhängig von etwaigen Störungen der Datenübertragung innerhalb der Netzwerkebene des Ersatzpfades. Aus zeitlicher Sicht erfolgt dies vorzugsweise in Phasen mit geringerem Datenverkehrsaufkommen, also beispielsweise in den Nachtzeiten, aber jedenfalls unabhängig von den Gegebenheiten in der anderen Netzwerkebene beziehungsweise in dem Ersatzpfad und vorzugsweise zeitnah nach dem Aufsetzen eines neuen Arbeitspfades in der ersten Netzwerkebene.

Soweit gewissermaßen entsprechend dem ersten Verfahrensschritt des erfindungsgemäßen Verfahrens das Backbone-Netz in mindestens zwei zueinander disjunkten Netzwerkebenen realisiert wird, dürfte als praxisrelevant und daher bevorzugt eine Ausbildung des Backbone-Netzes in beziehungsweise durch genau zwei Netzwerkebenen anzusehen sein. Solange sichergestellt ist, dass in beiden Netzwerkebenen jeweils die Netzknoten aller Netzwerkstandorte durch Kanten untereinander verbunden sind, können die beiden Netzwerkebenen dem Grunde nach insoweit unterschiedlich ausgebildet sein, als sich für beide bei der Abbildung in einem Graphen unterschiedliche Formen für einen solchen Graphen ergeben. Jedoch ist es aus Gründen eines besseren Netzwerkmanagements entsprechend einer bevorzugten Ausgestaltung des erfindungsgemäßen Verfahrens vorgesehen, beide Netzwerkebenen zueinander äquivalent auszubilden. Das heißt bezüglich wesentlicher physischer Parameter, wie der Dämpfung, aber insbesondere auch der Weglänge des Trägersignals bei optischen Netzen, werden die Transportinfrastrukturen beider Netzwerkebenen weitgehend identisch ausgebildet. Dies meint außerdem, dass in jeder Netzwerkebene jeweils die Netzknoten derselben Netzwerkstandorte direkt miteinander verbunden werden.

Vorzugsweise ist das erfindungsgemäße Verfahren zudem so ausgestaltet, dass nach einer Beseitigung der in dem ursprünglich in der ersten Netzwerkebene ausgebildeten Arbeitspfad aufgetretenen Störung in einem gewissermaßen weiteren Verfahrensschritt der Datenübertragungsweg von dem in der ersten Netzwerkebene neu aufgebauten Arbeitspfad wieder auf den ursprünglichen Arbeitspfad verlagert wird.

Mit der zuletzt beschriebenen Form der Verfahrensgestaltung wird letztlich das Prinzip einer Kombination von Protection und Restoration konsequent zu Ende geführt. Hieraus ergibt sich der Vorteil, dass letztlich immer eine volltransparente Vorgehensweise bei der Netzwerknutzung hinsichtlich der Lastverteilung beim Transport von Nutzdaten zwischen den einzelnen Netzwerkebenen und bis hinunter auf die einzelne Kante gegeben ist. Das heißt, es lässt sich eine Lastverteilung planen, die auch, abgesehen von kurzen Phasen, in denen ein oder mehrere Datenpfade kurzzeitig von dem ursprünglichen Arbeitspfad auf einen Ersatzpfad umgeschaltet sind, immer in dieser Form eingehalten wird.

Wie bereits dargestellt, ist die Gestaltung des Verfahrens gemäß seines grundsätzlichen erfinderischen, im Patentanspruch 1 charakterisierten Prinzips unabhängig von der Art des Kommunikationsnetzes, insbesondere unabhängig davon, ob es sich bei diesem Kommunikationsnetz um ein optisches Netz oder um ein elektrisch/elektronisches Netz handelt. Eine spezielle Ausgestaltungsform des Verfahrens bezieht sich jedoch auf dessen Anwendung in einem optischen Kommunikationsnetz. Die Verfahrensgestaltung ist hierbei so, dass die Wellenlänge eines in dem Arbeitspfad einer Ende-zu-Ende-Verbindung für die Datenübertragung verwendeten optischen Trägersignals während der gesamten Dauer einer störungsfreien Übertragung über den Arbeitspfad, also bereits vor dem Auftreten eines Fehlers im Arbeitspfad, für dieselbe Ende-zu-Ende-Verbindung als "Gastwellenlänge" in dem Ersatzpfad mitgeführt wird. Bei einer solchen, für optische Kommunikationsnetze bevorzugten Verfahrensgestaltung wird unmittelbar die konsequente Umsetzung des Prinzips der optischen Protection als Teilaspekt des erfindungsgemäßen Verfahrens erkennbar. Es wird demnach in einer der anderen Netzwerkebenen, also nicht in der ersten Netzwerkebene, in welcher der Arbeitspfad ursprünglich bereitgestellt und aufgebaut wird, nicht nur ein für den Störungsfall verwendbarer Ersatzpfad festgelegt, sondern dieser Ersatzpfad durch Belegung mit einem Trägersignal, dessen Wellenlänge der Wellenlänge des Trägersignals im zugehörigen Arbeitspfad entspricht, gewissermaßen in einer Art Standby gehalten. Im Unterschied zum Arbeitspfad wird lediglich (im regulären Betrieb, das heißt solange keine Störung des Arbeitspfades vorliegt) der Ersatzpfad nicht aktiv gemanagt. Gleichwohl ist der Ersatzpfad unmittelbar betriebsbereit.

Entsprechend einer besonders bevorzugten Weiterbildung des Verfahrens, welche sich auf optische Kommunikationsnetze mit einem in zwei Netzwerkebenen ausgebildeten Backbone-Netz bezieht, erfolgt hinsichtlich der in Arbeitspfaden der beiden Netzwerkebenen verwendeten Übertragungskanäle und ihrer Wellenlängen eine Art verschränkter Betrieb. Bezogen auf eine Durchnummerierung der in dem optischen Kommunikationsnetz verwendeten Übertragungskanäle in hinsichtlich ihrer Trägerfrequenzen und damit ihrer Wellenlängen aufsteigender oder absteigender Reihenfolge, wird dabei eine der Netzwerkebenen zur Bereitstellung von Arbeitspfaden für Übertragungskanäle mit geradzahliger Kanalnummer und die andere Netzwerkebene zur Bereitstellung von Arbeitspfaden für Übertragungskanäle mit ungeradzahliger Kanalnummer verwendet.

Grundsätzlich wäre auch eine Verfahrensweise denkbar, gemäß welcher beispielsweise in Arbeitspfaden der ersten Netzwerkebene Datenübertragungskanäle des oberen Wellenlängenspektrums und in der anderen Netzwerkebene Datenübertragungskanäle des unteren Wellenlängenspektrums verwendet werden.

Allerdings ist die Optimierung optischer Verstärker und deren Konfiguration sehr stark wellenlängenabhängig. Dabei werden im Zusammenhang mit der Übertragung von Trägersignalen im oberen Wellenlängenspektrum an einen solchen Verstärker ganz andere Anforderungen gestellt, als bei der Übertragung von Trägersignalen im unteren Wellenlängenbereich. Insoweit bietet die zuletzt beschriebene verschränkte Arbeitsweise besondere Vorteile. Auch hierbei wird die Wellenlänge eines in einer der Netzwerkebenen in einem Arbeitspfad verwendeten Trägersignals in der jeweils anderen Netzwerkebene als "Gastwellenlänge" in einem für den vorgenannten Arbeitspfad bereits aufgesetzten Ersatzpfad mitgeführt. Die hinsichtlich der Wellenlängen der Übertragungskanäle verschränkte Nutzung der beiden Netzwerkebenen zum Aufbau von Arbeitspfaden bietet darüber hinaus einen weiteren Vorteil. Dieser besteht darin, dass der für einen Arbeitspfad unter Verwendung eines als Gastwellenlänge mitgeführten Trägersignals in der anderen Netzwerkebene aufgebaute Ersatzpfad aufgrund des aktiven Managements bezüglich der Wellenlänge benachbarter Übertragungskanäle, welche in derselben Netzwerkebene zur Ausbildung von Arbeitspfaden für Übertragungskanäle von anderen Ende-zu-Ende-Verbindungen verwendet werden, in gewisser Weise passiv mitgemanagt wird. Dies betrifft insbesondere das Management und die Auslegung in den Netzknoten angeordneter und darüber hinaus als Zwischenverstärker auf den Kanten vorgesehener optischer Verstärker im Sinne einer Optimierung.

Das die Aufgabe lösende und zur Durchführung des Verfahrens ausgebildete optische Kommunikationsnetz mit verbesserter Multi Layer Resilienz für die Datenübertragung besteht aus einem Backbone-Netz mit an mehreren Netzwerkstandorten angeordneten Netzknoten, mit Kanten, nämlich die Netzknoten verbindenden Glasfaserkabeln, und aus an den Standorten an die Netzwerkebenen und deren Netzknoten angekoppelten Datenquellen und Datensenken. Die Netzknoten des Backbone-Netzes sind durch Label Switch Router (LSR) und ROADMs ausgebildet. Letzteres gilt dabei hinsichtlich einer Betrachtung aus logischer Sicht, meint also nicht, dass der beziehungsweise die Label Switch Router eines Netzknotens und die jeweils zugehörigen ROADMs unmittelbar räumlich gemeinsam angeordnet sein müssen. Bei den Datenquellen und Datensenken handelt es sich um Label Edge Router (LER), welche Übergänge zwischen dem Backbone-Netz und Zugangsnetzen für das Backbone-Netz ausbilden.

Im Hinblick auf die Funktion der letztgenannten Label Edge Router als Datenquellen beziehungsweise Datensenken sei dabei Folgendes angemerkt. Eigentlich handelt es sich bei den Datenquellen und Datensenken um Endgeräte von Nutzern des Kommunikationsnetzes, welche Daten über das Netz aussenden und empfangen. Diese Endgeräte sind über Zugangsnetze und Label Edge Router an das Backbone-Netz angekoppelt, so dass Daten über die Label Edge Router dem Backbone-Netz zugeführt und aus diesem ausgekoppelt werden. Betrachtet aus der Sicht des Backbone-Netzes stellen demnach die Label Edge Router Datenquellen und Datensenken für das Backbone-Netz dar. Soweit vorstehend und in den nachfolgenden Erläuterungen sowie in den Patentansprüchen von Datenquellen und Datensenken gesprochen wird, wird dabei von diesem Verständnis ausgegangen. Demnach werden hierunter, soweit nicht anders ausgeführt, in optischen Kommunikationsnetzen die Label Edge Router und (im Hinblick auf die Darstellungen zum Verfahren) in Kommunikationsnetzen unter Nutzung anderer Übertragungsmedien damit vergleichbare, als Übergangseinrichtungen zum Backbone-Netz wirkende Einrichtungen verstanden.

Im Übrigen geht auch der Begriff des optischen Kommunikationsnetzes von einem Verständnis aus, bei welchem ausschließlich das Backbone-Netz und die gegebenenfalls Zugangsnetze unterschiedlichster Art an das Backbone-Netz ankoppelnden Label Edge Router betrachtet werden. Nur bei diesen Komponenten handelt es sich demnach zwingend um optische Netzelemente, wohingegen in den Zugangsnetzen, insbesondere auf der sogenannten letzten Meile, auch rein elektrische Netzelemente, Übertragungseinrichtungen und Übertragungsverbindungen vorhanden sein können.

Die LSR beziehungsweise Label Switch Router als Teil der Netzknoten des Backbone-Netzes erzeugen und senden weder selbst Daten aus noch empfangen sie selbst Daten im Sinne dessen, dass diese durch sie weiter verarbeitet würden. Vielmehr dienen sie lediglich der Weiterleitung der Daten beziehungsweise der Trägersignale mit den Daten, der Einkopplung von Trägersignalen mit Daten in das Backbone-Netz und der Auskopplung von Trägersignalen mit Daten aus dem Backbone-Netz. Dennoch soll im Zusammenhang mit den nachfolgenden Erläuterungen auch von "sendenden Netzknoten" beziehungsweise "Sendern" sowie von "empfangenden Netzknoten" beziehungsweise "Empfängern" gesprochen werden. Dies dient aber ausschließlich dazu, die einer jeweiligen Betrachtung beziehungsweise Erläuterung zugrunde liegende Richtung des Signalflusses zu kennzeichnen. Demnach ist ein sendender Knoten beziehungsweise Sender ein Netzknoten, über welchen durch einen Label Edge Router ein Trägersignal mit Daten in das Backbone-Netz eingespeist wird, wohingegen ein empfangender Netzknoten beziehungsweise Empfänger einen Netzknoten bezeichnet, bei welchem in dem jeweils betrachteten Zusammenhang ein Trägersignal mit Daten eingeht und gegebenenfalls aus dem Backbone-Netz ausgekoppelt sowie einem Label Edge Router zugeführt wird. Zur Unterscheidung werden die jeweiligen Label Edge Router, gemäß dem vorstehend erläuterten Verständnis, als Datenquellen beziehungsweise Datensenken bezeichnet.

Erfindungsgemäß ist bei dem zur Lösung der Aufgabe vorgeschlagenen optischen Kommunikationsnetz das Backbone-Netz, dem Grundprinzip des bereits erläuterten Verfahrens folgend, in zwei zueinander disjunkten, das heißt, bezüglich des Transports der Nutzdaten, zueinander physisch vollständig disjunkten Netzwerkebenen ausgebildet. Jede der beiden Netzwerkebenen stellt dabei eine alle Netzwerkstandorte des Backbone-Netzes miteinander verbindende Transportinfrastruktur aus Netzknoten und Kanten dar. Ferner sind die Datenquellen und Datensenken - also nach dem zuvor erläuterten Verständnis die Label Edge Router - der jeweiligen Netzwerkstandorte jeweils an einen Netzknoten jeder der beiden Netzwerkebenen des Backbone-Netzes angekoppelt. Ferner sind im Hinblick auf die Funktionalität eines jeden durch Label Switch Router und ROADMs ausgebildeten Netzknotens als Sender, also als ein Netzknoten, über welchen Trägersignale mit Daten in das Backbone-Netz eingespeist werden, zwischen jedem Label Switch Router und dem zugehörigen ROADM passive Splitter angeordnet, durch welche von dem Netzknoten abgehende Trägersignale mit Nutzdaten jeweils beiden Netzwerkebenen des Backbone-Netzes zugeleitet werden. Im Hinblick auf die Funktionalität als Empfänger, also als Netzknoten, an welchem Trägersignale mit Daten zur Weiterleitung in ein Zugangsnetz ausgekoppelt werden, sind ferner zwischen jedem Label Switch Router und dem jeweils zugehörigen ROADM eines Netzknotens optische Schalter und Koppler angeordnet. Hierbei bestimmt die jeweilige Schalterstellung eines optischen Schalters, ob ein Trägersignal mit Daten über einen in der ersten Netzwerkebene ausgebildeten Arbeitspfad oder im Falle einer Störung im Arbeitspfad über einen in der zweiten Netzwerkebene ausgebildeten Ersatzpfad empfangen, also dem zugehörigen Label Switch Router zugeführt wird.

Details der Erfindung sollen nachfolgend nochmals anhand von Zeichnungen erläutert werden. Im Einzelnen zeigen:
- Fig. 1:: ein Backbone-Netz mit zwei Netzwerkebenen,
- Fig. 2:: Details der Netzknoten eines Netzwerkstandortes des Backbone-Netzes gemäß Fig. 1,
- Fig. 3:: die Anbindung der Datenquellen und Datensenken an das Backbone-Netz,
- Fig. 4:: das Prinzip der Datenübertragung zwischen zwei Netzwerkstandorten unter Nutzung der beiden Netzwerkebenen des Backbone-Netzes nach Fig. 1 gemäß der Erfindung,
- Fig. 5:: die erfindungsgemäße Ausbildung der Netzknoten zur Übertragung der Daten gemäß der Fig. 4.

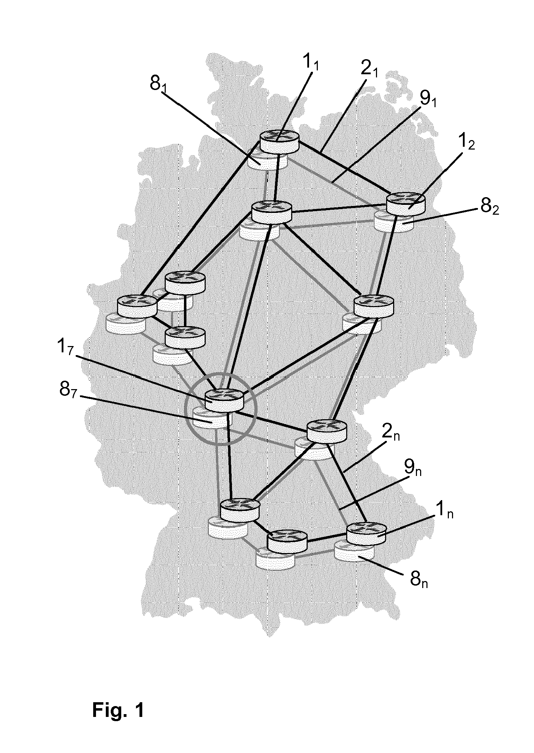

Die Fig. 1 zeigt beispielhaft in einer schematischen Darstellung ein in zwei Netzwerkebenen A, B (Einzelheiten zu den Elementen und Ebenen des Netzwerks siehe auch die nachfolgenden Figuren) ausgebildetes Backbone-Netz eines optischen Kommunikationsnetzes. Die beiden Netzwerkebenen A, B des Backbone-Netzes sind zueinander physisch vollständig disjunkt ausgebildet. Dies meint, jeder im Rahmen einer Ende-zu-Ende-Verbindung zwischen einer Datenquelle und einer Datensenke 3₁ - 3ₙ ausgebildete Arbeitspfad wird ausschließlich innerhalb einer ersten der beiden Netzwerkebenen A, B geführt, wohingegen zu einem solchen Arbeitspfad parallel ein ausschließlich in der jeweils anderen Netzwerkebene A, B geführter Ersatzpfad aufgesetzt wird. Die Datenquellen bilden im Hinblick auf die Bidirektionalität des Datenaustausches gleichzeitig jeweils auch Datensenken aus, so dass Datenquellen und Senken in allen Fig. gleichermaßen mit dem Bezugszeichen 3 und einer entsprechenden Laufziffer 1 - n bezeichnet sind.

Die vollständige physische Disjunktheit der beiden Netzwerkebenen A, B bezieht sich dabei insbesondere auf die die Netzknoten 1₁,1ₙ; 8₁,8ₙ der Netzwerkstandorte zum Zweck der Übertragung von Nutzdaten miteinander verbindenden Kanten 2₁ - 2ₙ; 9₁ - 9ₙ und anderen Netzknoten 1₂, - 1ₙ₋₁; 8₂ - 8ₙ₋₁, und zwar auf die Transportportstruktur zwischen einem, nach dem oben erläuterten Verständnis sendenden Netzknoten 1₁, 8₁ und einem empfangenden Netzknoten 1ₙ, 8ₙ. Dies schließt indes nicht aus, dass an den Netzwerkstandorten jeweils zwischen den Netzknoten 1₁ - 1ₙ; 8₁ - 8ₙ der beiden Netzwerkebenen A, B auch Verbindungen bestehen. Diese sind jedoch nicht als Kanten 2₁ - 2ₙ; 9₁ - 9ₙ des Backbone-Netzes anzusehen, da über sie unabhängig von eventuellen im Backbone-Netz selbst auftretenden Störungen und im Rahmen des erfindungsgemäßen Prinzips keine Nutzdaten übertragen werden. Es handelt sich bei derartigen Verbindungen 12₁ - 12ₙ vielmehr um Verbindungen kurzer Reichweite (die miteinander korrespondierenden Netzknoten 1₁ - 1ₙ; 8₁ - 8ₙ beider Netzwerkebenen eines Netzwerkstandortes beziehungsweise Core PoP Standortes sind allenfalls wenige Kilometer voneinander entfernt ausgebildet), die im Gegensatz zu den für die Nutzdatenübertragung verwendeten sogenannten "bunten Schnittstellen" hoher Reichweite über sogenannte "graue Schnittstellen" hergestellt werden.

Wie aus der Fig. 1 ersichtlich, sind die aus Netzknoten 1₁ - 1ₙ; 8₁ - 8ₙ und Kanten 2₁ - 2ₙ; 9₁ - 9ₙ bestehenden Transportinfrastrukturen der beiden das Backbone-Netz ausbildenden Netzwerkebenen A, B bei dem gezeigten Beispiel, wie bevorzugt, zueinander äquivalent ausgebildet. Dies meint insbesondere, dass in den beiden Netzwerkebenen A, B jeweils die Netzknoten 1₁ - 1ₙ; 8₁ - 8ₙ derselben Netzwerkstandorte untereinander durch Kanten 2₁ - 2ₙ; 9₁ - 9ₙ beziehungsweise Glasfaserkabel untereinander verbunden sind. Gewissermaßen stellt die Transportinfrastruktur einer Netzwerkebene im Grunde eine Kopie der Transportinfrastruktur der jeweils anderen Netzwerkebene dar.

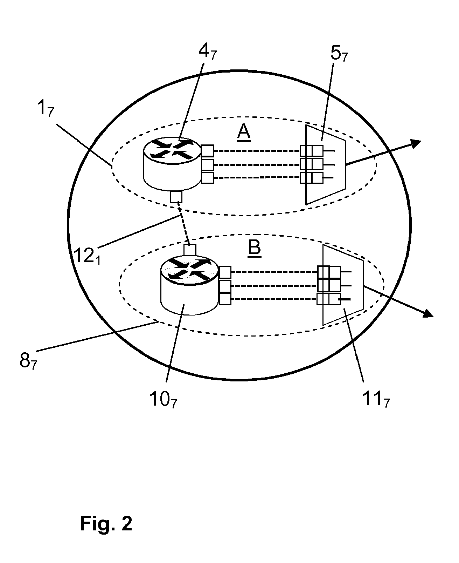

Die Fig. 2 zeigt ebenfalls schematisch, aber etwas mehr ins Detail gehend, die Ausbildung der Netzknoten 1₇, 8₇ an dem in der Fig. 1 durch einen Kreis eingefassten Netzwerkstandort. Die Figur zeigt die Netzknoten 1₇, 8₇ zunächst unter Außerbetrachtlassung außerdem vorhandener Splitter 6₁ - 6ₙ, optischer Schalter 7₁ - 7ₙ und Koppler (optische Schalter und Koppler sind gemeinsam mit 7 und einer Laufziffer beziehungsweise einem Index gekennzeichnet). Demnach weist jede Netzwerkebene A, B an dem Standort mindestens einen aus einem Label Switch Router 4₁ - 4ₙ; 10₁ - 10ₙ und einem zugehörigen ROADM 5₁ - 5ₙ 11₁ - 11ₙ bestehenden Netzknoten 1₁ - 1ₙ; 8₁ - 8ₙ auf, für welchen gewissermaßen ein Abbild, nämlich ein in gleicher Weise durch einen Label Switch Router 4₁ - 4ₙ, 10₁ - 10ₙ und einen ROADM 5₁ - 5ₙ 11₁ - 11ₙ ausgebildeter Netzknoten 1₁ - 1ₙ; 8₁ - 8ₙ in der anderen Netzwerkebene A, B existiert. Wie in der Fig. 2 zu erkennen, können dabei der Label Switch Router 4₁ - 4ₙ eines Netzknotens 1₁ - 1ₙ der ersten Netzwerkebene A und der Label Switch Router 10₁ - 10ₙ eines gewissermaßen das Abbild des Netzknotens 1₁ - 1ₙ in der ersten Netzwerkebene A darstellenden Netzknotens 8₁ - 8ₙ trotz der physischen Disjunktheit der beiden Netzwerkebenen A, B miteinander verbunden sein. Jedoch wird eine solche Verbindung 12₁ - 12ₙ, was durch eine entsprechend geringe Gewichtung in den Verwaltungsstrukturen beziehungsweise einer das Netzwerk verwaltenden Datenbank sichergestellt wird, nicht für die Datenübertragung über einen in der ersten Netzwerkebene A aufgebauten Arbeitspfad oder für die Datenübertragung über einen im Falle einer Störung des Arbeitspfades genutzten Ersatzpfad in der zweiten Netzwerkebene B verwendet. Es handelt sich vielmehr um eine über eine graue Schnittstelle hergestellte Verbindung 12₁ - 12ₙ kurzer Reichweite.

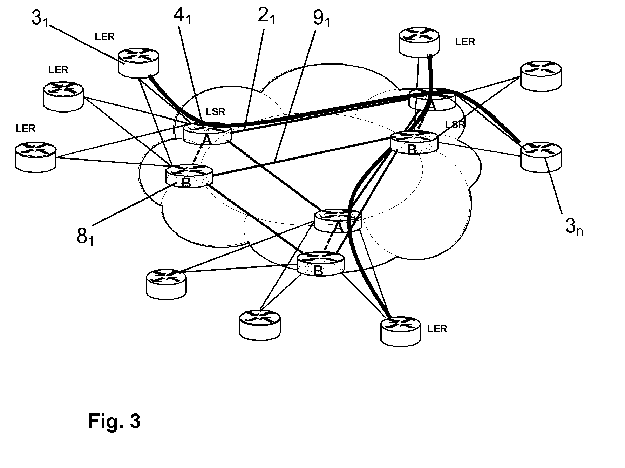

Die Fig. 3 zeigt die Anbindung jeweils mehrerer Datenquellen und Datensenken 3₁ - 3ₙ in Form von Label Edge Routern (LER) an das Backbone-Netz im Bereich der einzelnen Core PoP Standorte. Jeder LER des optischen Kommunikationsnetzes kann zu jedem anderen LER im Rahmen einer Ende-zu-Ende-Verbindung eine Verkehrsbeziehung haben (angedeutet durch die beiden dicker gezeichneten Linien). Ein LER ist jeweils an beide, in den beiden unterschiedlichen Netzwerkebenen A, B ausgebildeten Netzknoten1₁ - 1ₙ; 8₁ - 8ₙ, nämlich an beide LSR seines Core PoP Standortes angebunden und setzt ein Verfahren zur Gleichverteilung des Verkehrs auf die erste Netzwerkebene (Ebene A) und die zweite Netzwerkebene (Ebene B) ein - "load balancing" oder auch "load sharing" genannt.

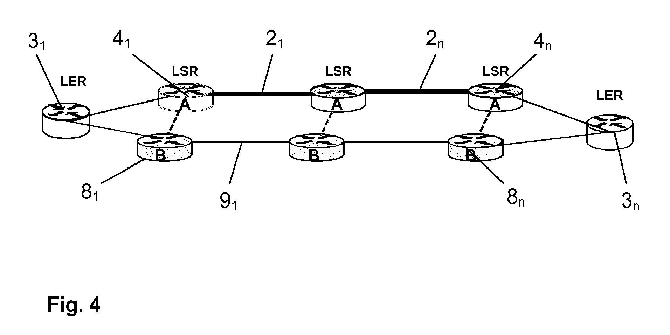

Die Fig. 4 veranschaulicht das Prinzip der Ausbildung des Backbone-Netzes in zwei hinsichtlich ihrer Transportinfrastruktur äquivalenten Netzwerkebenen A, B. Jede der Netzwerkebenen A, B wird demnach (hier unter Außerbetrachtlassung ebenfalls zu den Netzknoten 1₁ - 1ₙ; 8₁ - 8ₙ gehörender ROADMs 5₁ - 5ₙ 11₁ - 11 ₙ) im Wesentlichen durch eine Mehrzahl von in den Netzknoten 1₁ - 1ₙ; 8₁ - 8ₙ angeordneten Label Switch Routern 4₁ - 4ₙ; 10₁ - 10ₙ und diese untereinander verbindende Kanten 2₁ - 2ₙ; 9₁ - 9ₙ (Glasfaserkabel) ausgebildet. Wie ebenfalls ersichtlich, sind die Datenquellen und Datensenken 3₁ - 3ₙ an den Netzwerkstandorten, nämlich die Label Edge Router (LER), am jeweiligen Netzwerkstandort jeweils an Netzknoten 1₁ - 1ₙ; 8₁ - 8ₙ beider Netzwerkebenen A, B angekoppelt. Die Abbildung symbolisiert die Ausbildung beziehungsweise das Aufsetzen eines über die Kanten 2₁ - 2n geführten Arbeitspfades in der ersten Netzwerkebene (Ebene A) durch eine dicker gezeichnete Linie. Zu diesem Arbeitspfad wird aber gleichzeitig ein Ersatzpfad in der zweiten Netzwerkebene (Ebene B) aufgebaut, indem das im Arbeitspfad der ersten Netzwerkebene A übertragene Trägersignal mit Nutzdaten in der zweiten Netzwerkebene B gewissermaßen als "Gastwellenlänge" mitgeführt wird. Dies entspricht dem Prinzip der Protection, wobei hier ein vollständiger Schutz dadurch gegeben ist, dass der Ersatzpfad in der gegenüber der Transportinfrastruktur der Netzwerkebene A vollständig disjunkten Transportinfrastruktur der zweiten Netzwerkebene B aufgesetzt wird.

Erfindungsgemäß wird zudem das entsprechend ausgestaltete Prinzip der Protection mit dem Prinzip der Restoration kombiniert. Dies geschieht dadurch, dass im Falle dessen, dass in dem Arbeitspfad der ersten Netzwerkebene A eine Störung auftritt, nicht nur ein Umschalten des Datenübertragungsweges auf den in der zweiten Netzwerkebene B geführten und bereits aufgesetzten Ersatzpfad erfolgt, sondern unmittelbar nach dem Umschalten des Datenübertragungsweges in der ersten Netzwerkebene A ein neuer Datenpfad als Arbeitspfad aufgesetzt wird. Nach dem erfolgreichen Aufsetzen eines neuen, als Arbeitspfad zu verwendenden Datenpfades in der ersten Netzwerkebene A wird der Datenübertragungsweg wieder von der zweiten Netzwerkebene B, also von dem Ersatzpfad, auf die erste Netzwerkebene A und den darin neu aufgebauten Datenpfad umgeschaltet beziehungsweise auf diesen verlagert.

Zu beachten ist, dass nach der Rückverlegung des Datenübertragungsweges in die Netzwerkebene A des ursprünglichen Arbeitspfades der auslösende Fehler noch nicht behoben ist. Um die gleiche Situation wie vor dem Fehlereintritt zu erreichen, ist es notwendig, dass der Faserbruch auf einer Kante 2₁ - 2ₙ repariert und danach wieder auf den originalen Arbeitspfad umgeschaltet wird. Dies kann aber zum Beispiel während regulärer Wartungsarbeiten erledigt werden, nämlich beispielsweise in einem nächtlichen "Wartungsfenster", wenn das Backbone-Netz einen oder nur wenig Datenverkehr trägt und deswegen kein Datenverlust zu befürchten ist. Solange, bis im Hintergrund ausgeführte Reparaturarbeiten zur Beseitigung der in dem ursprünglichen Arbeitspfad aufgetretenen Störung abgeschlossen sind, werden im Rahmen ein und derselben ursprünglich zwischen zwei Standorten aufgebauten Ende-zu-Ende-Verbindung Nutzdaten mittels des entsprechenden Trägersignals über den in der ersten Netzwerkebene A neu aufgebauten Datenpfad übertragen. Nach erfolgter Beseitigung der Störung wird der Datenübertragungsweg vorzugsweise wieder auf den ursprünglich aufgesetzten und nun wieder störungsfreien Arbeitspfad zurückgeschaltet.

Selbstverständlich werden in den Netzwerkebenen A, B nicht nur ein Arbeitspfad und ein Ersatzpfad aufgesetzt. Vielmehr wird zur Etablierung einer Vielzahl von Ende-zu-Ende-Verbindungen mit der Möglichkeit der Übertragung von Nutzdaten eine Vielzahl von Arbeitspfaden und zugehörigen Ersatzpfaden aufgesetzt beziehungsweise etabliert, wobei die Datenübertragung über die einzelnen Ende-zu-Ende-Verbindungen unter Nutzung unterschiedlicher Kanäle, das heißt unter Nutzung unterschiedlicher Trägerfrequenzen beziehungsweise Wellenlängen erfolgt. Die Vorgehensweise ist hierbei vorzugsweise derart, dass bezogen auf eine Durchnummerierung der Übertragungskanäle in hinsichtlich ihrer Trägerfrequenzen aufsteigender oder absteigender Reihenfolge in einer der Netzwerkebenen A, B Arbeitspfade für hinsichtlich ihrer Kanalnummer ungerade Übertragungskanäle aufgesetzt werden, wohingegen in der jeweils anderen Netzwerkebene A, B Arbeitspfade für hinsichtlich ihrer Kanalnummer gerade Übertragungskanäle etabliert werden. Gleichzeitig wird aber zu jedem Arbeitspfad in der jeweils anderen Netzwerkebene A, B ein selbst nicht aktiv gemanagter Ersatzpfad aufgesetzt.

Durch diese hinsichtlich der Übertragungskanäle beziehungsweise ihrer Trägerfrequenzen gewissermaßen verschränkte Arbeitsweise wird erreicht, dass die jeweils, wie bereits ausgeführt, nicht aktiv gemanagten Ersatzpfade gewissermaßen im Zuge des Managements der in derselben Netzwerkebene A, B etablierten und hier aktiv gemangten Arbeitspfade mitgemanagt werden. Dies ermöglicht ein reibungsloses Umschalten von einem Arbeitspfad auf einen Ersatzpfad und eine unbeeinträchtigte Übernahme der Datenübertragung durch den betreffenden Ersatzpfad.

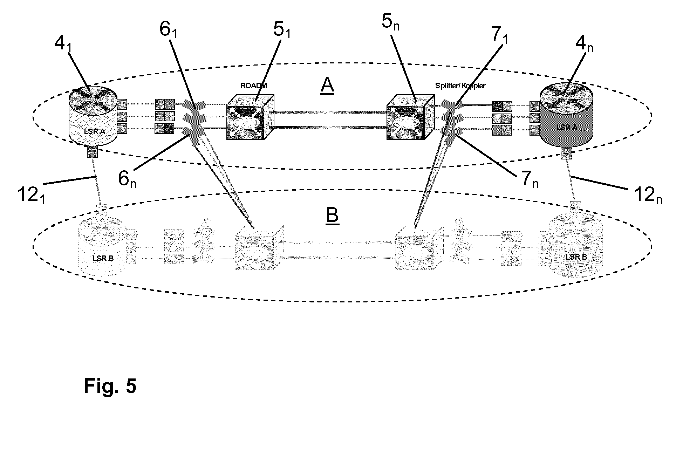

Die Fig. 5 veranschaulicht, durch welche Maßnahmen in den Netzknoten 1₁ - 1ₙ; 8₁ - 8ₙ der Netzwerkstandorte die Etablierung eines Ersatzpfades für jeden Arbeitspfad sowie das verhältnismäßig reibungslose empfängerseitige Umschalten von einem gestörten Arbeitspfad auf den zugehörigen Ersatzpfad ermöglicht wird. Dazu sind in den Netzknoten 1₁ - 1ₙ; 8₁ - 8ₙ jeweils zwischen einem Label Switch Router 4₁ - 4ₙ; 10₁ - 10ₙ und dem zugehörigen ROADM 5₁ - 5ₙ 11₁ - 11ₙ einerseits Splitter 6₁ - 6ₙ (im Hinblick auf die Funktionalität des Netzknotens mit dem LSR 4₁ als Sender) und andererseits optische Schalter 7₁ - 7ₙ und Koppler (im Hinblick auf die Funktionalität des Netzknotens mit dem LSR 4ₙ als Empfänger) vorgesehen. Die Fig. 5 veranschaulicht die Verhältnisse im Hinblick auf eine Datenflussrichtung vom links dargestellten Netzknoten (LSR 4₁ mit ROADM 5₁) zu dem rechts dargestellten Netzknoten (ROADM 5ₙ mit LSR 4ₙ), wobei der linke Netzknoten als Sender und der rechte Netzknoten als Empfänger fungiert.

Wie ersichtlich, werden von dem linken Netzknoten der ersten Netzwerkebene (Ebene A) ausgehende Trägersignale mit Nutzdaten durch die zwischen dem entsprechenden LSR 4₁ und dem ROADM 5₁ angeordneten Splitter 6₁ - 6ₙ sowohl der ersten Netzwerkebene A und den dort etablierten Arbeitspfaden als auch der zweiten Netzwerkebene B mit den zu den Arbeitspfaden der ersten Netzwerkebene A aufgesetzten Ersatzpfaden zugeleitet. Empfängerseitig, also an dem empfangenden Netzknoten der ersten Netzwerkebene A, werden die Arbeitspfade und die Ersatzpfade zwischen dem ROADM 5ₙ und dem LSR 4ₙ durch Koppler und optische Schalter 7₁ - 7ₙ gewissermaßen zusammengeführt. Jedoch erfolgt keine vollständige Zusammenführung der Pfade, da in Abhängigkeit von der Stellung der optischen Schalter Daten durch den LSR 4ₙ der ersten Netzwerkebene A entweder ausschließlich über den Arbeitspfad oder im Falle dessen, dass dieser gestört ist, über den Ersatzpfad empfangen werden.

Dies heißt, im störungsfreien Normalbetrieb, werden von dem links dargestellten Netzknoten (LSR 4₁, ROADM 5₁ und dazwischen angeordnete Splitter 6₁ - 6ₙ) beziehungsweise von einer mit ihm gekoppelten Datenquelle (hier unter Außerbetrachtlassung eines die Daten eigentlich aussendenden Endgerätes) Daten sowohl in den Arbeitspfad in der ersten Netzwerkebene A als auch in den Ersatzpfad der zweiten Netzwerkebene B eingespeist. Empfängerseitig - also aus der Sicht des rechtsdargestellten empfangenden Netzwerkknotens (ROADM 5ₙ, LSR 4ₙ und dazwischen angeordnete Kombination aus Kopplern und Schaltern 7₁ - 7ₙ) werden diese Daten aufgrund der "Schalterstellung" des jeweiligen optischen Schalters der Schalter 7₁ - 7ₙ nur über den Arbeitspfad empfangen.

Erst im Falle einer im Arbeitspfad festgestellten Störung wird der Datenübertragungsweg empfängerseitig durch den entsprechenden Schalter auf den Ersatzpfad umgeschaltet.

Aus der Fig. 5 wird auch nochmals ersichtlich, dass die beiden Netzwerkebenen A, B hinsichtlich der der Übertragung der Nutzdaten über das durch sie ausgebildete Backbone-Netz zwischen dem linken, sendenden Netzkonten (LSR 4₁, ROADM 5₁ und dazwischen angeordnete Splitter 6₁ - 6ₙ) und dem rechten, empfangenden Netzknoten (ROADM 5ₙ, LSR 4ₙ und dazwischen angeordnete Kombination aus Kopplern und Schaltern 7₁ - 7ₙ) zueinander physisch vollständig disjunkt sind. Die gleichwohl zwischen den beiden LSR auf der Sendeseite als auch zwischen den LSR auf der Empfängerseite über graue Schnittstellen bestehende Verbindung 12₁, 12ₙ bleibt insoweit außer Betracht, da sie regulär für die Übertragung der Nutzdaten nicht verwendet wird. Im Hinblick auf den Datentransport spielt diese Verbindung 12₁, 12ₙ allenfalls in dem hier nicht betrachteten Sonderfall einer Störung zwischen dem LSR 4₁, 4ₙ und dem zugehörigen, mit dem LSR 4₁, 4ₙ in der Regel, aber jedenfalls nicht zwingend in einem Objekt angeordneten ROADM 5₁, 5ₙ, eine Rolle.

Eine ähnliche, ebenfalls der Durchführung des erfindungsgemäßen Verfahrens dienende Netzstruktur ist grundsätzlich auch für hinsichtlich des Übertragungsmediums andere, wie insbesondere elektrische/elektronische Netze denkbar. Bei ihnen wären lediglich die Splitter 6₁ - 6ₙ, Koppler und optischen Schalter 7₁ - 7ₙ durch andere, auf elektrischer Ebene vergleichbar wirkende Elemente ersetzt und gegebenenfalls darüber hinausgehende der speziellen Netzstruktur Rechnung tragende Maßnahmen erforderlich. Jedenfalls das erfindungsgemäße Verfahren umfasst daher auch solche anderen Netze.

In der Praxis werden Ende-zu-Ende-Verbindungen für die Übertragung von Nutzdaten selbstverständlich bidirektional aufgebaut, so dass jeder Netzknoten in Bezug auf eine solche Ende-zu-Ende-Verbindung wechselweise als Sender und Empfänger fungiert. Daher sind in allen Netzkoten zwischen den Label Switch Routern und den zugehörigen ROADMs sowohl Splitter als auch optische Schalter und Koppler angeordnet. Insoweit zeigt die Fig. 5 die Verhältnisse vereinfacht in Bezug auf nur eine Übertragungsrichtung.

## Patentansprüche

1. Verfahren zur Verbesserung der Multi Layer Resilienz in einem Kommunikationsnetz, in welchem an mehreren Netzwerkstandorten Datenquellen und Datensenken (3₁ - 3ₙ) an ein Backbone-Netz aus Netzknoten (1₁ - 1ₙ; 8₁ - 8ₙ) und aus die Netzknoten (1₁ - 1ₙ; 8₁ - 8ₙ) miteinander verbindenden Datentransportverbindungen (Kanten 2₁ - 2n; 9₁ - 9ₙ) angekoppelt sind, **gekennzeichnet durch**
a.) Ausbildung des Backbone-Netzes in mindestens zwei Netzwerkebenen (A, B) mit jeweils einer alle Netzwerkstandorte für die Übertragung von Trägersignalen mit Nutzdaten miteinander verbindenden Transportinfrastruktur aus Netzknoten (1₁ - 1ₙ; 8₁ - 8ₙ) und Kanten (2₁ - 2n; 9₁ - 9ₙ), wobei die Transportinfrastrukturen der verschiedenen Netzwerkebenen (A, B,...Z) zueinander disjunkt ausgebildet sowie die Datenquellen und Datensenken (3₁ - 3ₙ) an jedem Netzwerkstandort jeweils an alle Netzwerkebenen (A, B, ...Z) des Backbone-Netzes angekoppelt werden,
b.) Bereitstellung und Nutzung eines Datenpfades innerhalb der Transportinfrastruktur einer ersten Netzwerkebene (A) als Arbeitspfad zur Datenübertragung über eine zwischen einer Datenquelle eines Netzwerkstandortes und einer Datensenke eines anderen Netzwerkstandortes aufgebaute Ende-zu-Ende-Verbindung,
c.) gleichzeitige Bereitstellung eines Datenpfades innerhalb der Transportinfrastruktur einer der anderen Netzwerkebenen (B, ...Z) als Ersatzpfad für dieselbe gemäß b) aufgebaute Ende-zu-Ende-Verbindung,
d.) Einkoppeln von einer Datenquelle gesendeter Daten sowohl in den Arbeitspfad als auch in den Ersatzpfad, wobei aber am Netzwerkstandort der Datensenke ein durchgängiger Datenübertragungsweg zur Datensenke nur über den Arbeitspfad hergestellt wird,
e.) Verlagern des Datenübertragungsweges am Netzwerkstandort der Datensenke vom Arbeitspfad der ersten Netzwerkebene (A) auf den in der anderen Netzwerkebene (B, ...Z) bereitgestellten Ersatzpfad im Falle einer innerhalb der ersten Netzwerkebene (A) bei der Datenübertragung über den Arbeitspfad auftretenden Störung,
f.) Restoration des Datenpfades in der ersten Netzwerkebene (A) **durch** Aufsetzen eines neuen Arbeitspfades für die gemäß b) aufgebaute Ende-zu-Ende-Verbindung,
g.) Verlagern des Datenübertragungsweges zurück auf die erste Netzwerkebene (A) und auf den darin aufgesetzten neuen Arbeitspfad am Netzwerkstandort der Datensenke nach dem Aufsetzen des neuen Arbeitspfades ist oder, wenn bei bereits neu aufgesetztem Arbeitspfad eine Störung der Datenübertragung innerhalb der Netzwerkebene (B, ...Z) des Ersatzpfades auftritt.

2. Verfahren nach Anspruch 1, **dadurch gekennzeichnet, dass** im Verfahrensschritt a) das Backbone-Netz in mindestens zwei Netzwerkebenen (A, B, ...Z) mit zueinander disjunkten, aber äquivalenten Transportinfrastrukturen aufgebaut wird, so dass in jeder Netzwerkebene (A, B, ...Z) die Netzknoten (1₁ - 1ₙ; 8₁ - 8ₙ) derselben Netzwerkstandorte direkt miteinander verbunden sind.

3. Verfahren nach einem der Ansprüche 1 oder 2, **dadurch gekennzeichnet, dass** das nach einer Beseitigung der in dem ursprünglich in der ersten Netzwerkebene (A) ausgebildeten Arbeitspfad aufgetretenen Störung in einem weiteren Verfahrensschritt g) der Datenübertragungsweg von dem in der ersten Netzwerkebene (A) neu aufgebauten Arbeitspfad wieder auf den ursprünglichen Arbeitspfad verlagert wird.

4. Verfahren nach Anspruch 1 oder 2, **dadurch gekennzeichnet, dass** im Verfahrensschritt a) das Backbone-Netz in zwei Netzwerkebenen (A, B) ausgebildet wird.

5. Verfahren nach Anspruch 1 oder 4 für ein optisches Kommunikationsnetz, **dadurch gekennzeichnet, dass** die Wellenlänge eines in dem Arbeitspfad einer Ende-zu-Ende-Verbindung für die Datenübertragung verwendeten optischen Trägersignals während der gesamten Dauer einer störungsfreien Datenübertragung über den Arbeitspfad für dieselbe Ende-zu-Ende-Verbindung bis zum Netzwerkstandort der Datensenke in dem Ersatzpfad als "Gastwellenlänge" mitgeführt wird.

6. Verfahren nach Anspruch 5 für ein Kommunikationsnetz mit einem in zwei Netzwerkebenen (A, B) ausgebildeten Backbone-Netz, **dadurch gekennzeichnet, dass** bezogen auf eine Durchnummerierung der Übertragungskanäle in hinsichtlich ihrer Trägerfrequenzen aufsteigender oder absteigender Reihenfolge im Sinne einer Lastaufteilung eine der Netzwerkebenen (A, B) zur Bereitstellung von Arbeitspfaden für Übertragungskanäle mit geradzahliger Kanalnummer und die andere Netzwerkebene (A, B) zur Bereitstellung von Arbeitspfaden für Übertragungskanäle mit ungeradzahliger Kanalnummer verwendet wird, wobei für jeden bereitgestellten Arbeitspfad in der jeweils anderen Netzwerkebene (A, B) ein Ersatzpfad durch Mitführen der in dem Arbeitspfad für das optische Trägersignal verwendeten Wellenlänge als "Gastwellenlänge" bereitgestellt wird.

7. Optisches Kommunikationsnetz mit verbesserter Multi Layer Resilienz für die Datenübertragung, bestehend aus einem Backbone-Netz mit an mehreren Netzwerkstandorten angeordneten, durch Label Switch Router (4₁ - 4ₙ, 10₁ - 10ₙ) und ROADMs (5₁ - 5ₙ 11₁ - 11ₙ) ausgebildeten Netzknoten (1₁ - 1ₙ; 8₁ - 8ₙ), aus Kanten (2₁ - 2n; 9₁ - 9ₙ), nämlich die Netzknoten (1₁ - 1ₙ; 8₁ - 8ₙ) als Datentransportverbindungen miteinander verbindenden Glasfaserkabeln und aus an den Standorten an deren Netzknoten (1₁ - 1ₙ; 8₁ - 8ₙ) angekoppelten Datenquellen und Datensenken (3₁ - 3ₙ) in Form von Label Edge Routern, welche Übergänge zwischen dem Backbone-Netz und Zugangsnetzen für das Backbone-Netz ausbilden, **dadurch gekennzeichnet, dass**
a.) das Backbone-Netz in zwei zueinander disjunkten Netzwerkebenen (A, B) mit jeweils einer alle Netzwerkstandorte für die Übertragung von Trägersignalen mit Nutzdaten miteinander verbindenden Transportinfrastruktur aus Netzknoten (1₁ - 1ₙ; 8₁ - 8ₙ) und Kanten (2₁ - 2n; 9₁ - 9ₙ) ausgebildet ist, wobei die Datenquellen und Datensenken (3₁ - 3ₙ) der jeweiligen Netzwerkstandorte jeweils an einen Netzknoten (1₁ - 1ₙ; 8₁ - 8ₙ) jeder der Netzwerkebenen (A, B) des Backbone-Netzes angekoppelt sind,
b.) zwischen jedem Label Switch Router (4₁ - 4ₙ; 10₁ - 10ₙ) und zugehörigem ROADM (5₁ - 5ₙ 11₁ - 11ₙ) eines jeden Netzknoten (1₁ - 1ₙ; 8₁ - 8ₙ) passive Splitter (6₁ - 6ₙ) angeordnet sind, durch welche von dem Netzknoten (1₁ - 1ₙ; 8₁ - 8ₙ) abgehende Trägersignale mit Nutzdaten beiden Netzwerkebenen (A, B) zugeleitet werden,
c.) zwischen jedem Label Switch Router (4₁ - 4ₙ; 10₁ - 10ₙ) und zugehörigem ROADM (5₁ - 5ₙ 11₁ - 11ₙ) eines jeden Netzknoten (1₁ - 1ₙ; 8₁ - 8ₙ) optische Schalter (7₁ - 7ₙ) und Koppler angeordnet sind, über welche an dem Netzknoten (1₁ - 1ₙ; 8₁ - 8ₙ) eingehende Trägersignale mit Nutzdaten dem Label Switch Router (4₁ - 4ₙ, 10₁ - 10ₙ) in Abhängigkeit vom Zustand des optischen Schalters (7₁ - 7ₙ) über einen in einer der beiden Netzwerkebenen (A, B) ausgebildeten Arbeitspfad oder über einen in der jeweils anderen Netzwerkebene (A, B) gleichzeitig ausgebildeten Ersatzpfad zugeleitet werden, wobei im Falle einer Störung des Arbeitspfades der Datenübertragungsweg durch den optischen Schalter (7₁ - 7ₙ) auf den Ersatzpfad und nach einer Restoration des Datenpfades in der Netzwerkebene (A; B) des ursprünglichen Arbeitspfades auf einen in dieser ersten Netzwerkebene (A, B) neu aufgesetzten Arbeitspfad umgeschaltet wird.

8. Optisches Kommunikationsnetz nach Anspruch 7, **dadurch gekennzeichnet, dass** die beiden Netzwerkebenen (A, B) zueinander äquivalent ausgebildet sind, wobei in beiden Netzwerkebenen (A, B) jeweils die Netzknoten (1₁ - 1ₙ; 8₁ - 8ₙ) derselben Netzwerkstandorte direkt miteinander verbunden sind.
